Europäisches Patentamt

European Patent Office

Office européen des brevets

(11) Publication number: **0 488 447 A1**

# EUROPEAN PATENT APPLICATION

(21) Application number: **91203013.7**

(22) Date of filing: **20.11.91**

(51) Int. Cl.⁵: **A23G 3/00**

(30) Priority: **30.11.90 IT 2221790**

(43) Date of publication of application:
**03.06.92 Bulletin 92/23**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE DK ES FR GR IT LI NL SE AT**

(71) Applicant: **UNILEVER PLC**
**Unilever House Blackfriars P.O. Box 68**
**London EC4P 4BO(GB)**

(84) **GB**

(72) Inventor: **Caggiano, Carlo**
**Via Po, 1- Parco Domus**
**I-80126 Napoli(IT)**

(74) Representative: **Keppels, Willem Richard**
**Engelbertus Gerardus, Drs. et al**
**Unilever N.V. Patent Division P.O.Box 137**
**NL-3130 AC Vlaardingen(NL)**

(54) **Confection on a stick.**

(57) Confection on a stick, which stick is provided with light refracting means, such as a lens, a prism, birefractive or polarizing means or refracting grids.

## BACKGROUND OF THE INVENTION

The invention relates to a confection on a stick, the stick having special features other than supporting the confection. Sticks for confections such as lollies and ice lollies serve primarily for supporting and handling the confection both during production and consumption thereof.

In practice it is known to provide sticks with imprintings, e.g. jokes and riddles. It is known to provide sticks with cut outs, whereby sticks may be used as building elements. However, only after a large number of sticks has been collected a reasonable fun in making building constructions may be experienced.

Also known are plastic sticks having characters formed thereon. In practice very little educational or amusement value will be derived from this type of sticks.

It is an object of the invention to provide sticks with an entirely new educational and amusement aspect.

## SUMMARY OF THE INVENTION

According to the invention the stick of the confection is provided with a light refracting device. Examples of suitable light refracting devices being lenses, Fresnel lenses, cylindrical lenses, prisms, birefractive and polarising means and refracting grids.

The sticks can be made with a handle portion and a light refracting portion, the latter being embedded in the confection material and emerging as a surprise after consumption. In another embodiment the refracting portion may be extending from the confection and if an elongate refracting device like a prism or a cylindrical lens is used, one end thereof may be embedded in and the other end extending from the confection.

The invention will be exemplified in the following description of some embodiments reference being taken to the drawings.

## DESCRIPTION OF THE DRAWINGS

Fig. 1   shows a conventional globular lolly having a lens with a handle as a stick,

Fig. 2   shows an ice lolly having a cylindrical lens or a reading bar inserted therein as a stick,

Fig. 3   shows a Fresnel lens with a handle.

## DESCRIPTION OF THE INVENTION

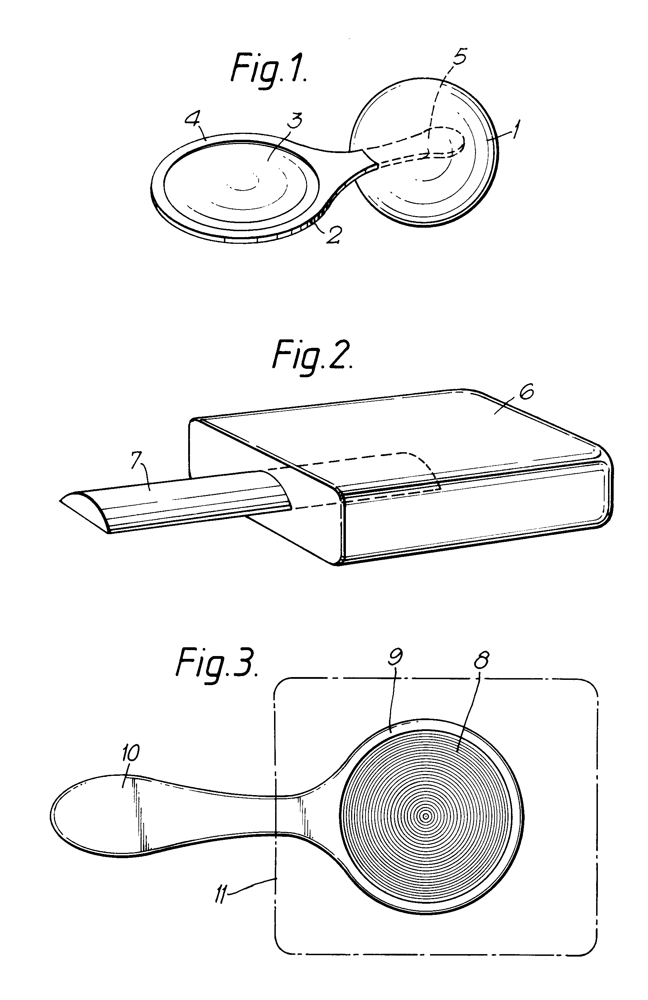

The lolly as shown in fig. 1 comprises a globular mass 1 of candy material and a stick 2 being partly arranged therein. The stick comprises a lens 3 in a round frame 4 having a handle 5 extending therefrom. The candy material is solidified around the handle portion 5 (shown in phantom lines).

The frozen confection or ice lolly shown in fig. 2 comprises a bloc 6 of ice confection material and a cylindrical lens 7 partly extending therefrom for use as a stick.

Fig. 3 shows a Fresnel lens 8, mounted in a frame 9 and provided with a handle 10. The lens 8 may be arranged in a block of frozen confection material as indicated by the phantom line 11.

## Claims

1. Confection on a stick, the stick being provided with a light refracting means.

2. Confection according to claim 1, the light refracting means extending from the confection.

3. Confection according to claim 1, the light refracting means being embedded in the confection.

4. Confection according to claim 1, 2 or 3, the light refracting means being a lens.

5. Confection according to claim 1, 2 or 3, the light refracting means being a prism.

6. Confection according to claim 1, 2 or 3, the light refracting means being an optical grid.

7. Confection according to claim 4, the lens being a Fresnel lens.

8. Confection according to claim 4, the lens being a cylindrical lens.

Fig.1.

Fig.2.

Fig.3.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 498 808 (R.L. WAGNER)<br>* column 2, line 26 - line 34; claims 1-6; figures 1-5 * | 1,2,3 | A23G3/00 |
| X | US-A-4 914 748 (W. K. SCHLOTTER ET AL.)<br>* column 1, line 52 - column 2, line 57; claims 1,3,6-13; figures 1-3 * | 1-4 | |
| A | DE-A-2 935 691 (WRIGLEY) | | |
| A | FR-A-2 397 793 (DE NANTES D'AVIGNONET ET AL.)<br>* page 3, line 9 - line 10; claims 1-4; figures 1,2,19,20 * | 1-4,5 | |
| A | FR-A-1 047 276 (H. PEREZ) | | |
| A | GB-A-309 304 (J. GLOOR) | | |
| A | US-A-2 363 503 (SOL DECKER)<br>* column 8, line 63 - line 65 * | 1-3 | |

TECHNICAL FIELDS SEARCHED (Int. Cl.5 )

A23G

The present search report has been drawn up for all claims

| Place of search | Date of completion of the search | Examiner |
|---|---|---|
| THE HAGUE | 13 JANUARY 1992 | GUYON R.H. |